# EUROPEAN PATENT APPLICATION

(11) **EP 4 198 068 A1**
(43) Date of publication of application: **21.06.2023**
(21) Application number: 21855956.5
(22) Date of filing: 10.08.2021
(51) Int. Cl.: C08G 18/32, C08G 18/22, C08G 18/24, C08G 18/65

(54) **URETHANE COMPOSITION**

(30) Priority: 12.08.2020 JP 2020136481
(71) Applicant: Nitto Kasei Co., Ltd., Osaka-shi Osaka 533-0031 (JP)
(72) Inventor: KANESHIRO, Hiroyuki, Osaka-shi, Osaka 533-0031 (JP)
(74) Representative: Gulde & Partner
(86) International application number: PCT/JP2021/029503
(87) International publication number: WO 2022/034877

(57) **Abstract**

A purpose of the present invention is to provide a urethane composition which does not require use of a lead-based curing catalyst, exhibits excellent curability and workability, and can be advantageously used in a variety of applications, such as adhesives, coating materials, sealing materials, waterproofing materials, floor materials, wall materials and paints.

The present invention provides a urethane composition which contains an active hydrogen-containing organic compound (A), a polyisocyanate (B), a curing catalyst (C), and an aromatic compound (D). The active hydrogen-containing organic compound (A) contains a polyol. The aromatic compound (D) has a structure represented by Chemical Formula (1).

## Description

### Technical Field

The present invention relates to a urethane composition, especially a curable polyurethane composition that can be advantageously used in a variety of applications, such as adhesives, coating materials, sealing materials, waterproofing materials, floor materials, wall materials, and paints.

### Background Art

Since polyurethane resins can be cured at normal temperature and are superior in various properties such as rubber elasticity, wear resistance, and durability, recently they have been particularly used as a paint, a flooring material, a waterproofing material, an adhesive, a potting material, a wall material, a sealing material, or the like. Methods for curing these polyurethane resins are classified roughly into a one-pack type such that a terminal isocyanate of a polyurethane polymer is cured by moisture in an air after construction and a two-pack type such that a main agent containing a polyurethane polymer and a curing agent containing polyols are mixed and cured in construction.

Conventionally, lead-based catalysts have been widely used as curing catalysts in two-pack type polyurethane compositions. However, in recent years, a use of lead-based catalysts has become an issue in terms of environment and safety, and curing catalysts that can replace lead-based catalysts have been considered. In Patent Literatures 1 and 2, an organic acid bismuth salt is cited as an example. However, there is an issue that it becomes difficult to secure a pot life although catalytic activity is high. Furthermore, if an additive amount of the catalyst is increased to improve curability at a low temperature, an initial elongation rate and a heat resistance are reduced. For this reason, an upper limit of the additive amount of the catalyst needs to be provided. In a severe winter in which a temperature is 5°C or below, there is a problem that curing is not completed by tomorrow morning, thereby a transition to a next step not proceeding.

### Citation List

### Patent Literature

[Patent Literature 1] JP-B-3696452
[Patent Literature 2] JP-B-4663171

### Summary of Invention

### Technical Problem

The present invention is made in consideration of such a situation and an object of the present invention is to provide a urethane composition that does not need a lead-based curing catalyst and is superior in curability and workability, as well as advantageously used in a variety of applications, such as adhesives, coating materials, sealing materials, waterproofing materials, floor materials, wall materials, and paints.

### Solution to Problem

A urethane composition of the present invention contains an active hydrogen-containing organic compound (A), a polyisocyanate (B), a curing catalyst (C), and an aromatic compound (D), wherein the active hydrogen-containing organic compound (A) contains a polyol, and the aromatic compound (D) has a structure represented by Chemical Formula (1).

### Advantageous Effects of Invention

According to the present invention, provided can be a urethane composition that does not need a lead-based curing catalyst and is superior in curability and workability, as well as advantageously used in a variety of applications, such as adhesives, coating materials, sealing materials, waterproofing materials, floor materials, wall materials, and paints.

### Description of Embodiments

Hereinafter, the present invention will be explained in detail.

A urethane composition of the present invention contains an active hydrogen-containing organic compound (A), a polyisocyanate (B), a curing catalyst (C), and an aromatic compound (D) as essential components, the active hydrogen-containing organic compound (A) containing a polyol.

### <Active Hydrogen-containing Organic Compound (A)>

The active hydrogen-containing organic compound (A) is an organic compound having an active hydrogen. The active hydrogen is a hydrogen of a functional group that can react with isocyanate to form a urethane or urea bond. Examples of the functional group include hydroxyl groups and amino groups. Examples of the active hydrogen-containing organic compound (A) include organic compounds having two or more above-mentioned functional groups in a molecule.

The active hydrogen-containing organic compound (A) contains a polyol (a compound having two or more hydroxyl groups at molecular ends). The active hydrogen-containing organic compound (A) may contain only the polyol, and may contain both the polyol and the active hydrogen-containing organic compound other than the polyol (polyamine etc.). The polyol is not particularly limited if it is used in general to produce a urethane composition. Examples of the polyol include polyether polyols, polyester polyols, polymer polyols, and flame-retardant polyols such as phosphorus-containing polyols and halogen-containing polyols. These polyols can be used singly, or mixed and used as appropriate.

Examples of the polyether polyol include products obtained by ring opening addition polymerization of, for example, an ethylene oxide, a propylene oxide, or a mixture thereof using, for example, ethylene glycol, propylene glycol, glycerin, pentaerythritol, ethylenediamine, ethanolamine, diethanolamine, or the like as an initiator, and polytetramethylene ether glycols obtained by ring-opening polymerization of tetrahydrofuran.

Examples of the polyester polyol include products obtained by condensation reaction of a polyalcohol and a polyvalent base carboxylic acid such as a maleic acid, a fumaric acid, a succinic acid, an adipic acid, a sebacic acid, an azelaic acid, a phthalic acid, an isophthalic acid, a terephthalic acid, and a trimellitic acid, and a lactone polymer. Examples of the polyalcohol include ethylene glycol, diethylene glycol, triethylene glycol, propylene glycol, dipropylene glycol, 1,3-butylene glycol, 1,4-butylene glycol, 1,5-pentanediol, 1,6-hexanediol, neopentyl glycol, decamethylene glycol, 2,4,4-trimethyl-1,3-pentanediol, cyclohexanediol, cyclohexanedimethanol, xylene glycol, hydroquinone bis (hydroxyethyl ether), hydrogenated bisphenol A, trimethylolpropane, glycerin, 1,2,6-hexanetriol, pentaerythritol, and castor oil, as well as oil-modified polyester polyol obtained by blending into an acid component higher fatty acids such as coconut oil fatty acids, linseed oil fatty acids, soybean oil fatty acids, cottonseed oil fatty acids, tung oil fatty acids, and castor oil fatty acids. Examples of the lactone polymer include products obtained by ring opening polymerization of ε-caprolactam, α-methyl-ε-caprolactam, ε-methyl-ε-caprolactam, or the like.

Examples of the polymer polyol include compounds obtained by singly polymerizing polymerizable monomers containing hydroxyl groups such as hydroxyethyl acrylate, hydroxybutyl acrylate, and trimethylolpropane acrylic acid monoester, or by copolymerizing these polymerizable monomers with copolymerizable monomers such as acrylic acid, methacrylic acid, styrene, acrylonitrile, and α-methylstyrene.

Examples of the flame-retardant polyol include phosphorus-containing polyols obtained by adding an alkylene oxide to a phosphoric acid compound, polyols obtained by ring opening polymerization of epichlorohydrin or trichlorobutylene oxide, and halogen-containing polyols in which hydrogen atoms of the polyether polyol, polyester polyol, or acrylic polyol are partially or fully replaced by fluorine atoms.

Examples of the polyamine include aliphatic polyamines and aromatic polyamines. Examples of the aliphatic polyamine include ethylenediamine and polyether polyamine. Examples of the aromatic polyamine include 3,3'-dichloro-4,4'-diaminodiphenylmethane, DETDA, 2,4-diamino-3,5-diethyltoluene, 2,6-diamino-3,5-diethyltoluene, mixtures thereof, mixtures such as Ethacure 100 (a mass ratio of 2,4-anisotropic/2,6-anisotropic: approximately 80/20) made by Albemarle Corporation, Ethacure 420 (4,4'-methylenebis(N-sec-butylaniline)), and 4,4 ' -methylenebis(2-ethyl-6-methylaniline).

These active hydrogen-containing organic compounds can be used alone or in combination of two or more kinds. In particular, the active hydrogen-containing organic compound preferably contains both a polyol and a polyamine. In this case, workability, curability, and mechanical properties of the composition are particularly good.

### <Polyisocyanate (B)>

The polyisocyanate (B) is a compound having two or more isocyanate groups in a molecule and is not particularly limited if it is used in general. Examples of the polyisocyanate (B) include alkylene diisocyanates such as trimethylene diisocyanate, trimethylhexamethylene diisocyanate, tetramethylene diisocyanate, and hexamethylene diisocyanate; cycloalkylene-based diisocyanates such as bis(isocyanatemethyl)cyclohexane, cyclopentane diisocyanate, cyclohexane diisocyanate, and isophorone diisocyanate; aromatic diisocyanates such as tolylene diisocyanate, phenylene diisocyanate, diphenylmethane diisocyanate, and diphenyl ether diisocyanate; aromatic aliphatic diisocyanates such as xylylene diisocyanate, and diisocyanate diethylbenzene; triisocyanates such as triphenylmethane triisocyanate, benzene triisocyanate, and toluene triisocyanate; tetraisocyanates such as diphenyldimethylmethane tetraisocyanate; polymerized polyisocyanates such as dimers and trimers of tolylene diisocyanate; and terminal isocyanate-containing compounds obtained by reacting an excess amount of these polyisocyanates with low molecular weight active hydrogen-containing organic compounds such as ethylene glycol, propylene glycol, diethylene glycol, trimethylolpropane, hydrogenated bisphenol A, hexanetriol, glycerin, pentaerythritol, castor oil, and triethanolamine.

Content of the polyisocyanate (B) in the urethane composition of the present invention is preferably 1 to 100 pts.mass, more preferably 5 to 30 pts.mass, per 100 pts.mass of the active hydrogen-containing organic compound (A). The content is, specifically for example, 1, 5, 10, 15, 20, 30, 40, 50, 60, 70, 80, 90, or 100 pts.mass and may be in the range between the two values exemplified herein.

### <Curing Catalyst (C)>

Examples of the curing catalyst in the present invention that can preferably be used include tin compounds, bismuth compounds, organic zinc compounds, organic zirconium compounds, and organic copper compounds. Among them, tin compounds and bismuth compounds are preferably used.

Known tin compounds can be used as the tin compound of the curing catalyst (C). Examples of the tin compound include divalent tin compounds such as tin octylate, tin naphthenate, tin stearate, and tin neodecanoate; tetravalent organotin compounds such as dibutyl tin dioctoate, dibutyl tin dilaurate, dioctyl tin diverthatate, dibutyl tin bistriethoxysilicate, dibutyl tin dioleyl malate, dibutyl tin diacetate, 1,1,3,3-tetrabutyl-1,3-dilauryloxycarbonyl-distanoxane, dibutyl tin oxybisethoxysilicate, dibutyl tin oxide, reaction products of dibutyl tin oxide and phthalate ester, and reaction products of dibutyl tin oxide and maleic acid diester, and dibutyl tin diacetylacetonate.

Known bismuth organic acids can be used as the bismuth compound of the curing catalyst (C). For example, bismuth carboxylate, bismuth 2-ethylhexylate, bismuth neodecanoate, and bismuth carboxylate of a resin acid bismuth salt are preferred.

Examples of the metal catalyst of the curing catalyst (C) that can preferably be used include organozinc catalysts such as zinc 2-ethylhexylate, zinc naphthenate, and zinc neodecanoate; organozirconium catalysts such as zirconyl 2-ethylhexylate, zirconyl naphthenate, and zirconyl neodecanoate; and organocopper catalysts such as copper naphthenate.

Content of the curing catalyst (C) in the urethane composition of the present invention is preferably 0.0005 to 5 pts.mass, more preferably 0.001 to 3 pts.mass, per 100 pts.mass, in total, of the active hydrogen-containing organic compound (A) and the polyisocyanate (B). When the content of the curing catalyst (C) is within the range, a balance between a curing performance and a pot life is excellent. The content is, specifically for example, 0.0005, 0.001, 0.005, 0.01, 0.05, 0.1, 0.5, 1, 2, 3, 4, or 5 pts.mass
and may be in the range between the two values exemplified herein.

The curing catalyst (C) can be blended to the active hydrogen-containing organic compound (A) or the polyisocyanate (B), but it is preferably blended to the active hydrogen-containing organic compound (A) in terms of storage stability. Furthermore, it can be added as an accelerator added at a construction site at a time of mixing two liquids, on an as-needed basis.

### <Aromatic Compound (D)>

The aromatic compound (D) of the present invention has a structure represented by Chemical Formula (1).

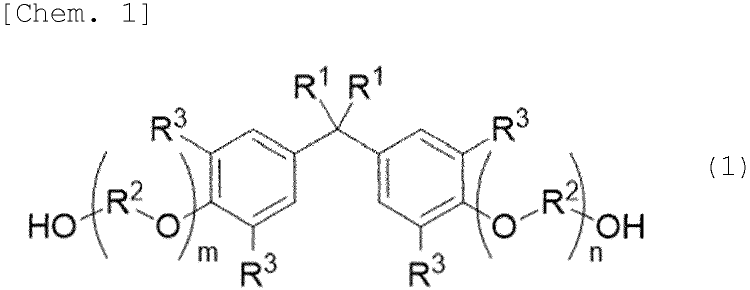

In Chemical Formula (1), two R¹ are the same as or different from each other, each of which is a hydrogen atom, an alkyl group having 1 to 8 carbon atoms, or an alkylene group having 2 to 16 carbon atoms, wherein the alkyl group may be branched, and the alkylene group is constituted of two R¹ linked to each other and may be branched; n and m are the same as or different from each other, each of which is an integer of 0 to 10; two R² are the same as or different from each other, each of which is an alkylene group that may be branched; the alkylene group has 1 to 4 carbon atoms in a main chain; and four R³ are the same as or different from each other, each of which is the hydrogen atom, or an alkyl or alkenyl group that has 1 to 8 carbon atoms and may be branched.

Examples of the alkyl group represented by R¹ or R³ that has 1 to 8 carbon atoms and may be branched include a methyl group, an ethyl group, a propyl group, an isopropyl group, a butyl group, an isobutyl group, a s-butyl group, a t-butyl group, a pentyl group, an isopentyl group, a neopentyl group, a t-pentyl group, a hexyl group, an isohexyl group, a 1-methylpentyl group, a 2-methylpentyl group, a 3-methylpentyl group, a 1-ethylbutyl group, a 2-ethylbutyl group, a 1,1-dimethylbutyl group, a 1,2-dimethylbutyl group, a 1,3-dimethylbutyl group, a 2,2-dimethylbutyl group, a 2,3-dimethylbutyl group, a 3,3-dimethylbutyl group, a 1,1,2-trimethylpropyl group, a heptyl group, an isoheptyl group, a 1-methylhexyl group, a 2-methylhexyl group, a 3-methylhexyl group, a 4-methylhexyl group, a 1-ethylpentyl group, a 2-ethylpentyl group, a 3-ethylpentyl group, a 1,1-dimethylpentyl group, a 1,2-dimethylpentyl group, a 1,3-dimethylpentyl group, a 1,4-dimethylpentyl group, a 2,2-dimethylpentyl group, a 2,3-dimethylpentyl group, a 2,4-dimethylpentyl group, a 3,3-dimethylpentyl group, a 3,4-dimethylpentyl group, a 4,4-dimethylpentyl group, a 1,1,2-trimethylbutyl group, a 1,1,3-trimethylbutyl group, a 1-ethyl-1-methylbutyl group, a 1-ethyl-2-methylbutyl group, a 1-ethyl-3-methylbutyl group, a 2-ethyl-3-methylbutyl group, a 1-ethyl-1,2-dimethylpropyl group, a 1-ethyl-2,2-dimethylpropyl group, a 1,1-diethylpropyl group, an octyl group, isooctyl group, a 1-methylheptyl group, a 2-methylheptyl group, a 3-methylheptyl group, a 4-methylheptyl group, a 5-methylheptyl group, a 1-ethylhexyl group, a 2-ethylhexyl group, a 3-ethylhexyl group, a 4-ethylhexyl group, a 1-propylpentyl group, a 2-propylpentyl group, a 1,1-dimethylhexyl group, a 1,2-dimethylhexyl group, a 1,3-dimethylhexyl group, a 1,4-dimethylhexyl group, a 1,5-dimethylhexyl group, a 2,2-dimethylhexyl group, a 2,3-dimethylhexyl group, a 2,4-dimethylhexyl group, a 2,5-dimethylhexyl group, a 3,3-dimethylhexyl group, a 3,4-dimethylhexyl group, a 3,5-dimethylhexyl group, a 4,5-dimethylhexyl group, a 5,5-dimethylhexyl group, a 1,1,2-trimethylpentyl group, a 1,1,3-trimethylpentyl group, a 1,1,4-trimethylpentyl group, a 2-ethyl-2-methylpentyl group, a 2-ethyl-3-methylpentyl group, a 2-ethyl-4-methylpentyl group, a 3-ethyl-2-methylpentyl group, a 3-ethyl-3-methylpentyl group, a 3-ethyl-4-methylpentyl group, a 1,1,2,2-tetramethylbutyl group, a 1, 1, 2, 3-tetramethylbutyl group, a 1,1,3,3-tetramethylbutyl group, a 2-ethyl-1,1-dimethylbutyl group, a 2-ethyl-2,3-dimethylbutyl group, a 2-ethyl-3,3-dimethylbutyl group, a 1,1-diethylbutyl group, a 1,2-diethylbutyl group, a 2,2-diethylbutyl group, a 1,1-diethyl-2-methylpropyl group, a 1-ethyl-1,2,2-trimethylpropyl group, and a 1-isopropyl-1,2-dimethylpropyl group.

Examples of the alkylene group constituted of two R¹ linked to each other include groups in which carbon atoms at the ends of above-mentioned alkyl groups are bonded to each other, such as an ethylene group, a propylene group, an isopropylene group, a butylene group, and a pentylene group. The number of carbon atoms in the main chain of this alkylene group is preferably 5. The number of carbon atoms of the alkylene group is, specifically for example, 2, 3, 4, 5, 6, 7, 8, 9, 10, 11, 12, 13, 14, 15, or 16, and may be in the range between the two values exemplified herein.

Example of the alkylene group represented by R² include an ethylene group, a propylene group, an isopropylene group, and a butylene group. The number of carbon atoms of this alkylene group is, for example, 1, 2, 3, or 4, and may be in the range between the two values exemplified herein.

Examples of the alkenyl group represented by R³ that has 1 to 8 carbon atoms and may be branched include a vinyl group, a 1-propenyl group, an isopropenyl group, an allyl group, a 1-butenyl group, a 2-butenyl group, a 3-butenyl group, a 1-methyl-1-propenyl group, a 2-methyl-1-propenyl group, a 2-methyl-2-propenyl group, a 1-pentynyl group, a 2-pentynyl group, a 3-pentynyl group, a 4-pentynyl group, a 1-methyl-1-butenyl group, a 2-methyl-1-butenyl group, a 3-methyl-1-butenyl group, a 1-methyl-2-butenyl group, a 2-methyl-2-butenyl group, a 3-methyl-2-butenyl group, a 1-methyl-3-butenyl group, a 2-methyl-3-butenyl group, a 3-methyl-3-butenyl group, a 1-ethyl-1-propenyl group, a 1-ethyl-2-propenyl group, a 1,1-dimethylallyl group, a 1,2-dimethyl-1-propenyl group, a 1-hexenyl group, a 2-hexenyl group, a 3-hexenyl group, a 4-hexenyl group, a 5-hexenyl group, a 2-methyl-3-pentenyl group, a 2-methyl-4-pentenyl group, a 3-methyl-1-pentenyl group, a 3-methyl-2-pentenyl group, a 3-methyl-3-pentenyl group, a 3-methyl-4-pentenyl group, a 4-methyl-1-pentenyl group, a 4-methyl-2-pentenyl group, a 4-methyl-3-pentenyl group, a 4-methyl-4-pentenyl group, a 3-ethyl-3-butenyl group, a 1-vinylbutyl group, a 1-ethylidenebutyl group, a 2-ethyl-1-butenyl group, a 2-ethyl-2-butenyl group, a 2-ethyl-3-butenyl group, a 1,1-dimethyl-2-butenyl group, a 1,1-dimethyl-3-butenyl group, a 2,2-dimethyl-3-butenyl group, a 2,3-dimethyl-1-butenyl group, a 3,3-dimethyl-1-butenyl group, a 3,3-dimethyl-2-butenyl group, a 1-isobutylvinyl group, a 1-heptenyl group, a 2-heptenyl group, a 3-heptenyl group, a 4-heptenyl group, a 5-heptenyl group, a 6-heptenyl group, a 2-methyl-3-hexenyl group, a 2-methyl-4-hexenyl group, a 2-methyl-5-hexenyl group, a 3-methyl-1-hexenyl group, a 3-methyl-2-hexenyl group, a 3-methyl-3-hexenyl group, a 3-methyl-4-hexenyl group, a 3-methyl-5-hexenyl group, a 4-methyl-1-hexenyl group, a 4-methyl-2-hexenyl group, a 4-methyl-3-hexenyl group, a 4-methyl-4-hexenyl group, a 4-methyl-5-hexenyl group, a 5-methyl-1-hexenyl group, a 5-methyl-2-hexenyl group, a 5-methyl-3-hexenyl group, a 5-methyl-4-hexenyl group, a 5-methyl-5-hexenyl group, a 2-ethyl-2-pentenyl group, a 2-vinylpentyl group, a 3-ethyl-3-pentenyl group, a 3-ethyl-4-pentenyl group, a 1,4-dimethyl-2-pentenyl group, a 2,2-dimethyl-4-pentenyl group, a 2,3-dimethyl-1-pentenyl group, a 2,3-dimethyl-3-pentenyl group, a 3-methyl-2-methylidenepentyl group, a 2-methyl-3-methylidenepentyl group, a 2,3-dimethyl-3-pentenyl group, a 2,4-dimethyl-1-pentenyl group, a 2,4-dimethyl-2-pentenyl group, a 2,4-dimethyl-4-pentenyl group, a 3,3-dimethyl-4-pentenyl group, a 4-methyl-3-methylenepentyl group, a 3,4-dimethyl-2-pentenyl group, a 3,4-dimethyl-3-pentenyl group, a 4,4-dimethyl-1-pentenyl group, a 2-isopropyl-3-butenyl group, a 1,3,3-trimethyl-1-butenyl group, a 2,3,3-trimethyl-1-butenyl group, a 1-octenyl group, a 2-octenyl group, a 3-octenyl, 4-octenyl group, a 5-octenyl group, a 6-octenyl group, a 7-octenyl group, a 2-methyl-3-heptenyl group, a 2-methyl-4-heptenyl group, a 2-methyl-5-heptenyl group, a 2-methyl-6-heptenyl group, a 3-methyl-1-heptenyl group, a 3-methyl-2-heptenyl group, a 3-methyl-3-heptenyl group, a 3-methyl-4-heptenyl group, a 3-methyl-5-heptenyl group, a 3-methyl-6-heptenyl group, a 4-methyl-1-heptenyl group, a 4-methyl-2-heptenyl group, a 4-methyl-3-heptenyl group, a 4-methyl-4-heptenyl group, a 4-methyl-5-heptenyl group, a 4-methyl-6-heptenyl group, a 5-methyl-1-heptenyl group, a 5-methyl-2-heptenyl group, a 5-methyl-3-heptenyl group, a 5-methyl-4-heptenyl group, a 5-methyl-5-heptenyl group, a 5-methyl-6-heptenyl group, a 6-methyl-1-heptenyl group, a 6-methyl-2-heptenyl group, a 6-methyl-3-heptenyl group, a 6-methyl-4-heptenyl group, a 6-methyl-5-heptenyl group, a 6-methyl-6-heptenyl group, a 2-ethyl-1-hexenyl group, a 2-ethyl-2-hexenyl group, a 2-vinyl hexyl group, a 3-ethyl-3-hexenyl group, a 3-ethyl-5-hexenyl group, a 3-ethenyl hexyl group, a 4-ethyl-3-hexenyl group, a 4-ethyl-5-hexenyl group, a 2,3-dimethyl-5-hexenyl group, a 2-methyl-3-methylidenehexyl group, a 3,3-dimethyl-1-hexenyl group, a 3,3-dimethyl-5-hexenyl group, a 2,4-dimethyl-3-hexenyl group, a 2-methyl-4-methylidenehexyl group, a 2,5-dimethyl-1-hexenyl group, a 2,5-dimethyl-3-hexenyl group, a 2,5-dimethyl-5-hexenyl group, a 3,3-dimethyl-4-hexenyl group, a 3,4-dimethyl-2-hexenyl group, a 3,4-dimethyl-4-hexenyl group, a 3,5-dimethyl-1-hexenyl group, a 3,5-dimethyl-2-hexenyl group, a 3,5-dimethyl-5-hexenyl group, a 4,4-dimethyl-1-hexenyl group, a 4,4-dimethyl-2-hexenyl group, a 4,5-dimethyl-3-hexenyl group, a 4,5-dimethyl-4-hexenyl group, a 4,5-dimethyl-5-hexenyl group, a 5-methylidene-2-heptanyl group, a 5-methyl-3-methylenehexyl group, a 5,5-dimethyl-1-hexenyl group, a 5,5-dimethyl-2-hexenyl group, a 5,5-dimethyl-3-hexenyl group, a 2-propyl-4-pentenyl group, a 2,2,4-trimethyl-3-pentenyl group, a 2,3,3-trimethyl-4-pentenyl group, a 2,3,4-trimethyl-4-pentenyl group, a 2,4,4-trimethyl-1-pentenyl group, a 3,3-dimethyl-2-methylidene-pentyl group, a 3,3,4-trimethyl-1-pentenyl group, a 3,4,4-trimethyl-1-pentenyl group, a 3,4,4-trimethyl-2-pentenyl group, a 2-ethenyl-2-methylpentyl group, a 2-ethyl-4-methyl-3-pentenyl group, 3-ethyl-2-methyl-1-pentenyl group, 3-ethyl-2-methyl-3-pentenyl group, 3-ethyl-3-methyl-4-pentenyl group, 3-ethyl-4-methyl-1-pentenyl group, 3-ethyl-4-methyl-2-pentenyl group, 3-ethyl-4-methyl-4-pentenyl group, 3-methyl-2-vinylpentyl group, 4-methyl-2-vinylpentyl group, and 3-isopropyl-4-pentenyl group.

The numbers of carbon atoms of R¹ and R³ are each, specifically for example, 1, 2, 3, 4, 5, 6, 7, or 8, and may be in the range between the two values exemplified herein.

Each of n and m is an integer of 0 to 10, and preferably an integer of 1 to 3 in terms of workability. n and m are, specifically for example, 0, 1, 2, 3, 4, 5, 6, 7, 8, 9, or 10, and may be in the range between the two values exemplified herein.

n+m is preferably an integer of 1 to 20, and preferably an integer of 2 to 10 in terms of properties after curing and workability, n+m is, specifically for example, 1, 2, 3, 4, 5, 6, 7, 8, 9, 10, 11, 12, 13, 14, 15, 16, 17, 18, 19, or 20, and may be in the range between the two values exemplified herein.

The aromatic compound (D) is preferably represented by following general Chemical Formula (2).

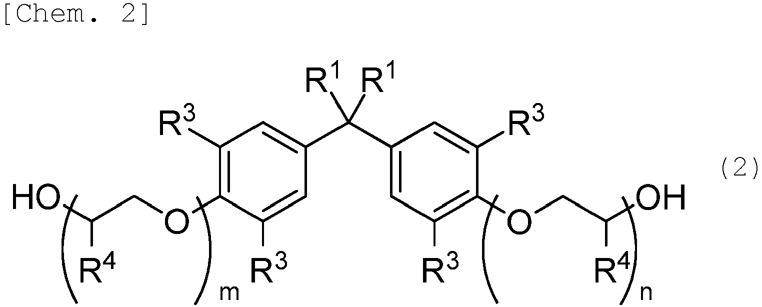

In Chemical Formula (2), two R¹ are the same as or different from each other, each of which is the hydrogen atom, the alkyl group having 1 to 8 carbon atoms, or the alkylene group having 2 to 16 carbon atoms, wherein the alkyl group may be branched, and the alkylene group is constituted of two R¹ linked to each other and may be branched; four R³ are the same as or different from each other, each of which is the hydrogen atom, or the alkyl or alkenyl group that has 1 to 8 carbon atoms and may be branched; the R⁴ represents the hydrogen atom or the methyl group; n and m are the same as or different from each other, each of which is the integer of 0 to 10; and n+m represents an integer of 1 to 20.

Specific examples of the aromatic compound (D) include 2,2-bis(4-polyoxyethyleneoxyphenyl)propane, 2,2-bis(4-polyoxypropyleneoxyphenyl)propane, ADEKA polyether BPX-11, ADEKA polyether BPX-21, 4,4'-(1-methylethylidene)bis(2-allylphenol), 2,2'-bis(4-hydroxy-3,5-dimethylphenyl)propane, 4,4'-(1,3-dimethylbutylidene)diphenol, and 1,1'-bis(4-hydroxy-3-methylphenyl)cyclohexane. The aromatic compound (D) may be a single compound or a mixture of a plurality of compounds.

A content ratio of the curing catalyst (C) to the aromatic compound (D), which is a molar ratio (the curing catalyst (C)/the aromatic compound (D)), is preferably 0.01 to 10, and more preferably 0.1 to 5. When the molar ratio is within the range, a balance between workability and curing performance is excellent. This molar ratio is, specifically for example, 0.01, 0.02, 0.03, 0.04, 0.05, 0.06, 0.07, 0.08, 0.09, 0.1, 0.2, 0.3, 0.4, 0.5, 0.6, 0.7, 0.8, 0.9, 1, 2, 3, 4, 5, 6, 7, 8, 9, or 10, and may be in the range between the two values exemplified herein.

The curing catalyst (C) and the aromatic compound (D) can be mixed beforehand. In this case, an organic solvent or a plasticizer may be added in terms of economy and workability. The organic solvent is not particularly limited if it is compatible with the curing catalyst and the aromatic compounds. Examples of the organic solvent include
aromatic compounds such as benzene, toluene, xylene, ethylbenzene, and trimethylbenzene; aliphatic compounds such as hexane, heptane, octane, decane, tetradecane, hexadecane, and octadecane;
aliphatic basic acid esters such as butyl acetate, octyl acetate, 2-ethylhexyl acetate, cyclohexyl acetate, benzyl acetate, isopropyl propionate, butyl propionate, isobutyl propionate, octyl propionate, 2-ethylhexyl propionate, cyclohexyl propionate, benzyl propionate, methyl octylate, ethyl octylate, lauryl octylate, methyl 2-ethylhexanoate, ethyl 2-ethylhexanoate, lauryl 2-ethylhexanoate, methyl oleate, ethyl oleate, butyl oleate, hexyl laurate, and glycerin monooleate;
mineral turpentines (mineral spirits), which are petroleum-based mixed solvents and contains paraffin-based, isoparaffin-based, olefin-based, or naphthene-based hydrocarbons, such as Swasol 1000, Swasol 1500, and Swasol 1800 (made by Maruzen Petrochemical Co., Ltd), T-SOL 100 and T-SOL 150 (made by JXTG Energy Corporation), Merbeil 20, Merbeil 30, and Merbeil 40 (made by Showa Shell Sekiyu Co., Ltd);
phthalic acid esters such as dimethyl phthalate, diethyl phthalate, dipropyl phthalate, diisopropyl phthalate, dibutyl phthalate, diheptyl phthalate, dioctyl phthalate, di-2-ethylhexyl phthalate, diisononyl phthalate, diisodecyl phthalate, dicyclohexyl phthalate, and butyl benzyl phthalate;
aliphatic dibasic acid esters such as dimethyl adipate, diethyl adipate, dipropyl adipate, diisopropyl adipate, dibutyl adipate, dihexyl adipate, dioctyl adipate, di2-ethylhexyl adipate, diisononyl adipate, diisodecyl adipate, 2-ethylhexyl azelaate, dibutyl sebacate, di-2-ethylhexyl sebacate, dimethyl maleate, diethyl maleate, dibutyl maleate, dioctyl maleate, di-2-ethyl hexyl maleate, and dibutyl fumarate;
divalent alcohol esters such as diethylene glycol dibenzoate and triethylene glycol 2-ethyl butyrate; and
oxyacid esters such as methyl acetyl ricylenoleate, butyl acetyl ricylenoleate, butyl phthalyl butyl glycolate, triethyl acetyl citrate, and tributyl acetyl citrate.

Among them, preferred are organic solvents or plasticizers that are liquid at normal temperature, have a boiling point of 150°C or higher, and are not separated even when preserved for a long period of time under a condition of lower temperature. In particular, mineral turpentines, phthalic acid esters, adipic acid esters, 2-ethylhexanoic acids, neodecanoic acids and the like are preferred. The boiling point of 150°C or higher suppresses volatility, which is preferred in terms of handling and preservation. Furthermore, if the solvent or the plasticizer is excellent in solubility to the curing catalyst and maintains uniformity during storage, metal content becomes uniform and stable curing time is obtained, which is more preferred.

### <Other Additives>

For a purpose of further improving economy, workability when applying the composition and properties after curing, additives that are usually added to a urethane composition, such as acidic compounds, fillers, colorants, plasticizers, curing accelerators, curing retardants, anti-sag agents, anti-aging agents, solvents, weatherability and heat resistance-imparting agents, and wetting and dispersing agents, may be added to the urethane composition of the present invention.

The acidic compound has an effect to stabilize the curing catalyst (C). The acidic compound is not particularly limited, and the acidic compound such as organic acids and inorganic acids can be used. Among them, aliphatic carboxylic acid compounds and organic sulfonic acid compounds are particularly preferred. More preferably, they are saturated or unsaturated and linear or branched aliphatic carboxylic acids having 2 to 18 carbon atoms. Specific examples of the aliphatic carboxylic acid include saturated aliphatic carboxylic acids such as acetic acid, propionic acid, hexanoic acid, octanoic acid, 2-ethylhexanoic acid, neodecanoic acid, lauric acid, and stearic acid; unsaturated aliphatic carboxylic acids such as oleic acid, linoleic acid, linolenic acid, and arachidonic acid; and saturated and unsaturated aliphatic dicarboxylic acids such as fumaric acid and maleic acid.

A molar ratio of the acidic compound to the curing catalyst (C), which is the molar ratio (the acidic compound/the curing catalyst (C)), is preferably 0.2 to 50, and more preferably 0.5 to 20. It is preferred that the molar ratio is within the range, in terms of securing the pot life and the properties after curing. This molar ratio is, specifically for example, 0.2, 0.3, 0.4, 0.5, 0.6, 0.7, 0.8, 0.9, 1, 2, 3, 4, 5, 6, 7, 8, 9, 10, 20, 30, 40, or 50, and may be in the range between the two values exemplified herein.

Specific examples of the filler include calcium carbonate (heavy calcium carbonate, precipitated calcium carbonate, etc.), kaolin, talc, fumed silica, precipitated silica, anhydrous silicic acid, hydrous silicic acid, clay, calcined clay, glass, bentonite, organic bentonite, shirasu balloon, glass fiber, asbestos, glass filament, ground quartz, siliceous earth, aluminum silicate, aluminum hydroxide, zinc oxide, magnesium oxide and titanium dioxide. Specifically, iron oxide, carbon black, phthalocyanine blue, phthalocyanine green, and the like are used as the colorant.

Specifically, phthalic acid esters such as dibutyl phthalate, diheptyl phthalate, dioctyl phthalate and butyl benzyl phthalate, carboxylic acid esters such as dioctyl adipate, dioctyl succinate, diisodecyl succinate, diisodecyl sebacate and butyl oleate, glycol esters such as pentaerythritol esters, phosphate esters such as trioctyl phosphate and tricresyl phosphate, epoxy plasticizers such as epoxidized soybean oil and benzyl epoxy stearate, chlorinated paraffin, and the like are used as the plasticizer.

Specifically, hydrogenated castor oil, anhydrous silicic acid, organic bentonite, colloidal silica and the like are used as the anti-sag agent. A vulcanization accelerator, a UV absorber, a radical chain inhibitor, a peroxide decomposition agent, various anti-aging agents and the like are used as other additives.

### Examples

Hereinafter, examples of the present invention will be explained, but the scope of the present invention is not limited thereto.

### 1. Preparation of Main Agent

### <Production Example 1>

109.5 g of tolylene diisocyanate (an equivalent ratio of NCO/OH=1.79) was added to 63.8 g of Polypropylene Glycol, Diol Type, 1000, 319.5 g of Polypropylene Glycol, Diol Type, 2,000, and 256.5 g of Polypropylene Glycol, Triol Type, 3000 and a mixture thereof was reacted at 95 to 105°C for 8 hours, resulting in obtaining isocyanate group-terminated TDI-based prepolymer A with NCO content of 3.10 mass%.

### <Production Example 2>

109.5 g of tolylene diisocyanate (the equivalent ratio of NCO/OH=1.79) was added to 63.8 g of Polypropylene Glycol, Diol Type, 1000, 405.0 g of Polypropylene Glycol, Diol Type, 2,000, and 171.0 g of Polypropylene Glycol, Triol Type, 3000 and a mixture thereof was reacted at 95 to 105°C for 8 hours, resulting in obtaining isocyanate group-terminated TDI-based prepolymer B with NCO content of 3.10 mass%.

### <Production Example 3>

134.5 g of isophorone diisocyanate (the equivalent ratio of NCO/OH=1.79) was added to 61.5 g of Polypropylene Glycol, Diol Type, 1000, 306.8 g of Polypropylene Glycol, Diol Type, 2,000, 246.8 g of Polypropylene Glycol, Triol Type, 3000 and 0.015 g of bismuth octylate, and a mixture thereof was reacted at 85 to 95°C for 6 hours, resulting in obtaining isocyanate group-terminated IPDI-based prepolymer C with NCO content of 3.10 mass%.

Details of the components in Production Examples described above are as follows:
Polypropylene Glycol, Diol Type, 1000: made by FUJIFILM Wako Pure Chemical Corporation
Polypropylene Glycol, Diol Type, 2000: made by FUJIFILM Wako Pure Chemical Corporation
Polypropylene Glycol, Triol Type, 3000: made by FUJIFILM Wako Pure Chemical Corporation
Tolylene diisocyanate: a mixture of 2,4-tolylenediisocyanate and 2,6-tolylenediisocyanate (mass ratio: 80/20), made by Tokyo Chemical Industry Co., Ltd.
Isophorone diisocyanate: isophorone diisocyanate (a mixture of isomers), made by made by Tokyo Chemical Industry Co., Ltd.
Bismuth octylate: bismuth tris (2-ethylhexanoate), bismuth content of 32.5%, made by Nitto Kasei Co., Ltd

### 2. Preparation of Urethane Composition

Two-pack type urethane compositions consisting of a main agent and a curing agent were prepared according to the compositions (pts.mass) shown in Tables 1 to 3.

**[Table 1]**

| Table 1 | | | Example | | | | | | | |
|---|---|---|---|---|---|---|---|---|---|---|
| | | | 1 | 2 | 3 | 4 | 5 | 6 | 7 | 8 |
| Main Agent | Polyisocyanate (B) | Prepolymer A | 150 | 150 | 150 | 150 | 150 | 150 | 150 | 150 |
| Curing Agent | Active Hydrogen-containing Organic Compound (A) | Polypropylene Glycol, Diol Type, 700 | 16.2 | 16.2 | 16.2 | 16.2 | 16.2 | 16.2 | 16.2 | 16.2 |
| | | Ethacure 100 Plus | 4.2 | 4.2 | 4.2 | 4.2 | 4.2 | 4.2 | 4.2 | 4.2 |
| | Filler | SUPER SS | 179.2 | 179.2 | 179.2 | 179.2 | 179.2 | 179.2 | 179.2 | 179.2 |
| | Plasticizer | DINP | 84.5 | 84.5 | 84.5 | 84.5 | 84.5 | 84.5 | 84.5 | 84.5 |
| | Solvent | Merbeil 30 | 15.50 | 15.65 | 15.45 | 15.50 | 15.50 | 15.50 | 15.45 | 15.50 |
| | Curing Catalyst (C) | BI-28 | 0.2 | 0.2 | 0.2 | 0.2 | | | | |
| | | K-KAT XK-651 | | | | | 0.2 | | | |
| | | PUCAT B7 | | | | | | 0.2 | | |
| | | NEOSTANN U-28 | | | | | | | 0.225 | |
| | | NEOSTANN U-830 | | | | | | | | 0.2 |
| | Aromatic Compound (D) | BA-P2 | 0.2 | 0.05 | | | 0.2 | 0.2 | | 0.2 |
| | | BISPHENOL A ETHOXYLATE | | | 0.25 | | | | | |
| | | ADEKA Polyether BPX-21 | | | | 0.2 | | | 0.225 | |
| Molar Ratio | | (C)/(D) | 0.5 | 2 | 0.6 | 0.6 | 0.4 | 0.1 | 1 | 0.5 |
| | | Acidic Compound/(C) | 0.7 | 0.7 | 0.7 | 0.7 | 0 | 0 | 0 | 0 |
| Workability (min) | | | A 41 | A41 | A 41 | A43 | A 44 | A45 | A40 | A 44 |
| Curability (Shore A Hardness) | | | A 37 | A 36 | A 38 | A 37 | A 37 | A 37 | A 36 | A 37 |

**[Table 2]**

| Table 2 | | | Example | | | | | | | |
|---|---|---|---|---|---|---|---|---|---|---|
| | | | 9 | 10 | 11 | 12 | 13 | 14 | 15 | 16 |
| Main Agent | Polyisocyanate (B) | Prepolymer B | | | | 150 | | | | |
| | | Prepolymer C | 150 | 150 | 150 | | 150 | 150 | 150 | 150 |
| Curing Agent | Active Hydrogen-containing Organic Compound (A) | Polypropylene Glycol, Diol Type, 700 | 16.2 | 16.2 | 16.2 | | 16.2 | 16.2 | 16.2 | 16.2 |
| | | Polypropylene Glycol, Diol Type, 2000 | | | | 32.3 | | | | |
| | | Ethacure 100 Plus | 4.2 | 4.2 | 4.2 | | 4.2 | 4.2 | 4.2 | 4.2 |
| | | 4,4'-Methylenebis(2-chloroaniline) | | | | 10.2 | | | | |
| | Filler | SUPER SS | 179.2 | 179.2 | 179.2 | 173.0 | 179.2 | 179.2 | 179.2 | 179.2 |
| | Plasticizer | DINP | 84.5 | 84.5 | 84.5 | 66.6 | 84.5 | 84.5 | 84.5 | 84.5 |
| | Solvent | Merbeil 30 | 15.50 | 15.45 | 15.50 | 15.50 | 15.50 | 15.50 | 15.50 | 15.50 |
| | Acidic Compound | Octylic Acid | | | | 2.0 | | | | |
| | Curing Catalyst (C) | BI-28 | 0.2 | | | 0.2 | 0.2 | 0.2 | 0.2 | 0.2 |
| | | NEOSTANN U-28 | | 0.225 | | | | | | |
| | | NEOSTANN U-830 | | | 0.2 | | | | | |
| | Aromatic Compound (D) | BA-P2 | 0.2 | | 0.2 | 0.2 | | | | |
| | | ADEKA Polyether BPX-21 | | 0.225 | | | | | | |
| | | 4,4'-(1-Methylethylidene)bis(2-allylphenol) | | | | | 0.2 | | | |
| | | 2,2-Bis(4-hydroxy-3,5-dimethylphenyl)propane | | | | | | 0.2 | | |
| | | 4,4'-(1,3-Dimethylbutylidene)diphenol | | | | | | | 0.2 | |
| | | 1,1-Bis(4-hydroxy-3-methylphenyl)cyclohexane | | | | | | | | 0.2 |
| Molar Ratio | | (C)/(D) | 0.5 | 1 | 0.5 | 0.5 | 0.5 | 0.5 | 0.5 | 0.5 |
| | | Acidic Compound/(C) | 0.7 | 0 | 0 | 45 | 0.7 | 0.7 | 0.7 | 0.7 |
| Workability (min) | | | A 130 | A 133 | A 160 | A 64 | A 119 | A 122 | A 120 | A 120 |
| Curability (Shore A Hardness) | | | A 44 | A 43 | A45 | A 37 | A 44 | A 43 | A 43 | A 40 |

**[Table 3]**

| Table 3 | | | Comparative Example | | | | | | | Referene Example |
|---|---|---|---|---|---|---|---|---|---|---|
| | | | 1 | 2 | 3 | 4 | 5 | 6 | 7 | 1 |
| Main Agent | Polyisocyanate (B) | Prepolymer A | 150 | 150 | 150 | 150 | 150 | 150 | 150 | 150 |
| Curing Agent | Active Hydrogen-containing Organic Compound (A) | Polypropylene Glycol, Diol Type, 700 | 16.2 | 16.2 | 16.2 | 16.2 | 16.2 | 16.2 | 16.2 | 16.2 |
| | | Ethacure 100 Plus | 4.2 | 4.2 | 4.2 | 4.2 | 4.2 | 4.2 | 4.2 | 4.2 |
| | Filler | SUPER SS | 179.2 | 179.2 | 179.2 | 179.2 | 179.2 | 179.2 | 179.2 | 179.2 |
| | Plasticizer | DINP | 84.5 | 84.5 | 84.5 | 84.5 | 84.5 | 84.5 | 84.5 | 84.5 |
| | Solvent | Merbeil 30 | 15.45 | 15.45 | 15.70 | 15.45 | 15.45 | 15.45 | 15.45 | 15.45 |
| | Curing Catalyst (C) | BI-28 | 0.45 | 0.2 | 0.2 | | | | | |
| | | K-KAT XK-651 | | | | 0.45 | | | | |
| | | PUCAT B7 | | | | | 0.45 | | | |
| | | NEOSTANN U-28 | | | | | | 0.45 | | |
| | Curing Catalyst | Nikka Octix Lead 24% (T) | | | | | | | | 0.45 |
| Workability (min) | | | X 32 | A41 | A43 | X 36 | A 40 | X 32 | A 51 | A 37 |
| Curability (Shore A Hardness) | | | A 36 | X 35 | X 35 | X 35 | X 33 | X 34 | X 32 | A 36 |

Details of the components in Tables are as follows:
Prepolymers A to C: products produced in Production Examples 1 to 3
Product name: Polypropylene Glycol, Diol Type, 700, made by FUJIFILM Wako Pure Chemical Corporation
Product name: Polypropylene Glycol, Diol Type, 2000, made by FUJIFILM Wako Pure Chemical Corporation
Product name: Ethacure 100 Plus, diethylmethylbenzenediamine, made by Albemarle Japan Corporation
Product name: 4,4'-Methylenebis(2-chloroaniline), 4,4'-diamino-3,3'-dichlorodiphenylmethane, made by Tokyo Chemical Industry Co., Ltd.
Product name: SUPER SS, calcium carbonate, made by Maruo Calcium Co., Ltd.
Product name: DINP, diisononyl phthalate, made by J-PLUS Co., Ltd.
Product name: Merbeil 30, made by Toa Oil Co., Ltd
Product name: Octylic acid, 2-Ethylhexanoic Acid, made by KH Neochem Co.,Ltd.
Product name: BI-28, a mixture of bismuth tris(2-ethylhexanoate) and 2-ethylhexanoic acid (mass ratio: 87/13), made by made by Nitto Kasei Co., Ltd
Product name: K-KAT XK-651, bismuth tris neodecanate, made by King Industries, Inc.
Product name: PUCAT B7, a resin acid bismuth salt, made by Nihon Kagaku Sangyo Co., Ltd.
Product name: NEOSTANN U-28, tin(II) octylate, made by Nitto Kasei Co., Ltd
Product name: NEOSTANN U-830, dioctyl tin dineodecanoate, made by Nitto Kasei Co., Ltd
Product name: Nikka Octix Lead 24% (T), lead octylate, made by Nihon Kagaku Sangyo Co., Ltd.
Product name: BA-P2, PO-based bisphenol, made by Nippon Nyukazai Co., Ltd.
Product name: Bisphenol A Ethoxylate, EO-based bisphenol, made by Sigma-Aldrich Corporation
Product name: ADEKA Polyether BPX-21, PO-based bisphenol, made by ADEKA Corporation
Product name: 4,4'-(1-Methylethylidene)bis(2-allylphenol), made by FUJIFILM Wako Pure Chemical Corporation
Product name: 2,2-Bis(4-hydroxy-3,5-dimethylphenyl) propane, made by Tokyo Chemical Industry Co., Ltd.
Product name: 4,4'-(1,3-Dimethylbutylidene)diphenol, made by Tokyo Chemical Industry Co., Ltd.
Product name: 1,1-Bis(4-hydroxy-3-methylphenyl)cyclohexane, made by Tokyo Chemical Industry Co., Ltd.

### 3. Evaluation

The following tests were performed on the compositions obtained. The results are shown in Tables 1 to 3.

As shown in Tables, all Examples had excellent workability and curability that were comparable to Reference Example 1 including a lead-based curing catalyst. On the other hand, in all Comparative Examples, at least one of workability and curability was not excellent.

### 3-1. Workability Test

The main agent and the curing agent were mixed, and a viscosity thereof was measured in an atmosphere with a temperature of 23±2°C and a relative humidity of 5015%. A time from a point just after mixing until a point at which the viscosity reaches 100 Pa s was measured, and rated as A for 37 minutes or more, which corresponds to a pot life equal to or longer than that of a lead catalyst, or as X for less than 37 minutes.

### 3-2. Curability Test

The main agent and the curing agent were mixed and cured in an atmosphere with a temperature of 312°C and a relative humidity of 5015%. Surface hardening after 16 hours was measured with a durometer (type A) and shore A hardness of each urethane composition was confirmed. The shore A hardness was rated as A for 36 or more, or as X for less than 36.

## Claims

1. A urethane composition containing an active hydrogen-containing organic compound (A), a polyisocyanate (B), a curing catalyst (C), and an aromatic compound (D),
wherein the active hydrogen-containing organic compound (A) contains a polyol,
the aromatic compound (D) has a structure represented by Chemical Formula (1), 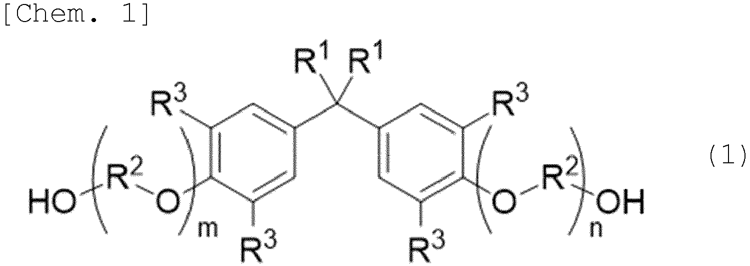
in Chemical Formula (1), two R¹ are the same as or different from each other, each of which is a hydrogen atom, an alkyl group having 1 to 8 carbon atoms, or an alkylene group having 2 to 16 carbon atoms, wherein the alkyl group may be branched, and the alkylene group is constituted of two R¹ linked to each other and may be branched; n and m are the same as or different from each other, each of which is an integer of 0 to 10; two R² are the same as or different from each other, each of which is an alkylene group that may be branched; the alkylene group has 1 to 4 carbon atoms in a main chain; and four R³ are the same as or different from each other, each of which is a hydrogen atom, or an alkyl or alkenyl group that has 1 to 8 carbon atoms and may be branched.

2. The urethane composition of Claim 1, wherein the curing catalyst (C) is at least one selected from a tin compound and a bismuth compound.

3. The urethane composition of Claim 2, wherein the bismuth compound is an organic acid bismuth salt.

4. The urethane composition of Claim 3, wherein the organic acid bismuth salt is selected from a bismuth tris (2-ethylhexanoate), a bismuth tris neodecanate, and a resin acid bismuth salt.

5. The urethane composition of any one of Claims 1 to 4, wherein the aromatic compound (D) has a structure represented by Chemical Formula (2), 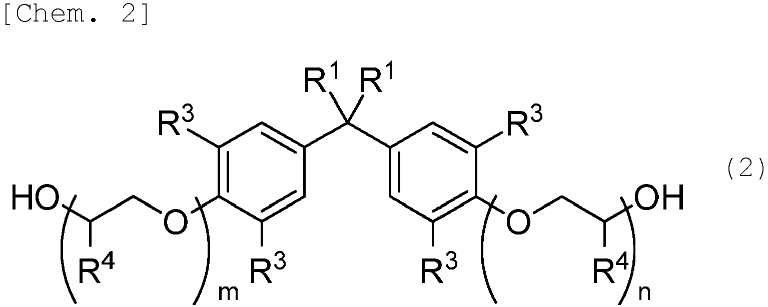 in Chemical Formula (2), two R¹ are the same as or different from each other, each of which is a hydrogen atom, an alkyl group having 1 to 8 carbon atoms, or an alkylene group having 2 to 16 carbon atoms, wherein the alkyl group may be branched, and the alkylene group is constituted of two R¹ linked to each other and may be branched; four R³ are the same as or different from each other, each of which is a hydrogen atom, or an alkyl or alkenyl group that has 1 to 8 carbon atoms and may be branched; R⁴ represents a hydrogen atom or a methyl group; n and m are the same as or different from each other, each of which is an integer of 0 to 10; and n+m represents an integer of 1 to 20.

6. The urethane composition of any one of Claims 1 to 5, wherein a content ratio of the curing catalyst (C) to the aromatic compound (D) is 0.01 to 10, the content ratio being expressed as a molar ratio (the curing catalyst (C)/the aromatic compound (D)).
